# EUROPEAN PATENT SPECIFICATION

(11) **EP 2 138 315 B1**
(45) Date of publication and mention of the grant of the patent: **17.08.2011**
(21) Application number: 09162477.5
(22) Date of filing: 11.06.2009
(51) Int. Cl.: B41J 11/00

(54) **Inkjet printer**
Tintenstrahldrucker
Imprimante jet d'encre

(30) Priority: 25.06.2008 JP 2008166319
(43) Date of publication of application: 30.12.2009
(73) Proprietor: Mimaki Engineering Co., Ltd., Tomi-shi, 389-0512 Nagano (JP)
(72) Inventor: Onozawa, Yoshiki, Nagano 389-0512 (JP); Yamada, Ryuji, Nagano 389-0512 (JP)
(74) Representative: Uchida, Kenji

(56) References cited:
- GB-A- 743 066
- US-A- 4 999 469
- US-A1- 2003 154 620
- US-B1- 6 428 161

## Description

The present invention relates to an inkjet printer and, more particularly, to an inkjet printer capable of drying a recording medium on which ink droplets are deposited.

In an inkjet printer, printing is conducted by ejecting dye-type ink such as acid dye, reactive dye, and substantive dye or pigment-type ink containing organic solvent such as solvent ink, onto a surface or both front and back surfaces of a sheet-like medium (recording medium) made of paper, silk, cotton, vinyl chloride, or the like. Especially in the industrial field, in such an inkjet printer, it is important to effectively dry a medium after deposition of ink onto the medium in order to quickly and easily conduct shipment and delivery after printing.

For example, disclosed in Patent document JP-A-2003-22890 is a drying apparatus for drying ink on a medium and comprises a wave guide having a slot, which is configured to allow the medium to move through the slot, and an electromagnetic energy source, which is adapted to establish an electric field within the wave guide such that an angle formed between a direction of the electric field and a longitudinal axis of fibers of the medium becomes greater than ten degrees and less than or equal to ninety degrees. The drying apparatus disclosed in Patent document JP-A-2003-22890 has a wave guide choke attached to the slot in order to reduce disruption in wall currents caused in the wave guide due to the slot.
It is known from document US 2003/0154620 an inkjet printer having a microwave drying device with a waveguide and an electromagnetic radiation source. Choke portions are provided that cooperate with introduction walls and exit walls of the waveguide.

However, in the technology of allowing a medium to move through the wave guide and supplying electromagnetic waves into the wave guide so as to dry the medium, the electromagnetic waves inside the wave guide have a tendency to leak out of the wave guide along the front and back surfaces of the medium moving through the wave guide. Accordingly, since a shielding means is required to prevent the electromagnetic waves from leaking out of the wave guide, the technology has a problem of little practicability.

On the other hand, there is another method of using an electrothermal heater or the like for drying the medium. However, the electrothermal heater or the like has a problem of extremely large power consumption. Though a method of improving the drying speed of ink is also conceivable, the improvement in drying speed of ink nearly reaches the limit so that it is difficult to further speed up the drying of the media in inkjet printers only by improvement in drying speed of ink.

The present invention is made to address the aforementioned problems and it is an object of the present invention to provide an inkjet printer capable of effectively conducting the drying of media with reducing the leakage of electromagnetic waves.

To this end, there is provided an inkjet printer as defined in Claim 1.

Since this structure comprises the ejection means for ejecting ink onto the recording medium, the wave guide which is adapted to allow the recording medium on which the ink is deposited by the ejection means to pass through the inside of the wave guide; and the electromagnetic-wave supplying means for supplying electromagnetic waves into the wave guide, it is possible to effectively dry the recording medium after being printed by uninterrupted processes.

Further, the wave guide has the introduction portion for introducing the recording medium into the inside of the wave guide and an exit portion for leading the recording medium out of the inside of the wave guide. Since the introduction portion includes two introduction walls which are disposed to sandwich the recording medium introduced therebetween and are parallel to the front and back surfaces of the recording medium, respectively, and the exit portion includes two exit walls similar to the introduction walls, the recording medium on which ink is deposited by the ejection means is allowed to pass through inside the wave guide.

The introduction portion further includes two choke portions which cooperate together with parts or all of the introduction walls, as their side surfaces, to define quadrangular columnar inner spaces, respectively and have openings communicating with the inner spaces from the introduction walls, respectively, and the exit portion includes two choke portions similar to the above ones. Furthermore, each of the inner spaces of the choke portions has a length in a feeding direction of the recording medium which is λ/4 relative to the wavelength λ of the electromagnetic waves supplied by the electromagnetic-wave supplying means, the electromagnetic waves, which are about to leak out of the wave guide along the front and rear surfaces of the medium, enter through the openings. Since the reflected waves are out of phase with the incident waves by λ/2 so that an electromagnetic wave entering into the choke portion through the opening and an electromagnetic wave reflected in the choke portion are out of phase with each other by λ/2 so as to attenuate each other. Therefore, it is possible to reduce electromagnetic waves leaking out of the wave guide along the front and rear surfaces of the medium.

In this case, it is preferable that the introduction wall and the exit wall have slits which extend from the peripheries of the openings in the outward direction of the wave guide.

According to this structure, since the current flowing along the introduction walls and the exit walls can be split by the slits extending from the peripheries of the openings in the outward direction of the wave guide, it is possible to further reduce the electromagnetic waves leaking out of the wave guide along the introduction walls and the exit walls.

Furthermore, the respective inner spaces of the choke portions are partly positioned inside the wave guide.

According to this structure, since the respective inner spaces of the choke portions are partly positioned inside the wave guide, the choke portion of the introduction portion and the choke portion of the exit portion are located close to each other, thereby increasing the strength of electric field in the wave guide.

An inkjet printer of the present invention is capable of effectively conducting the drying of a medium with reducing the leakage of electromagnetic waves.

The above, and the other objects, features and advantages of the present invention will be made apparent from the description of preferred embodiments, given as non-limiting examples, with reference to the accompanying drawings in which:
Fig. 1 is a perspective view showing an inkjet printer according to a first embodiment not forming part of the invention,
Fig. 2 is an illustration showing a state of printing and drying of a medium in the inkjet printer according to the first embodiment not forming part of the invention;
Fig. 3 is a perspective view showing a wave guide according to the first embodiment not forming part of the invention;
Fig. 4 is a sectional view showing the wave guide according to the first embodiment not forming part of the invention, taken along a Y-Z plane;
Fig. 5 is a sectional view showing an example, in which the positions of openings shown in Fig. 4 are varied, taken along the Y-Z plane;
Fig. 6 is a sectional view showing an example, in which the positions of λ/4 choke portions shown in Fig. 4 are varied, taken along the Y-Z plane;
Fig. 7 is a perspective sectional view of the wave guide according to the first embodiment not forming part of the invention, taken along a X-Y plane;
Fig. 8 is a sectional view of the wave guide according to the first embodiment not forming part of the invention, taken along the X-Z plane;
Fig. 9 is a perspective sectional view of a portion about slits of the wave guide according to the first embodiment not forming part of the invention, taken along the X-Z plane;
Fig. 10 is a sectional view of the portion about the slits of the wave guide according to the first embodiment not forming part of the invention, taken along the X-Z plane;
Fig. 11 is a sectional view showing an electric field in the wave guide, taken along a Y-Z plane;
Fig. 12 is an illustration showing the movement of electromagnetic waves in the λ/4 choke portions;
Fig. 13 is an illustration showing the movement of electromagnetic waves in the λ/4 choke portions in case shown in Fig. 5 where the positions of the openings are varied;
Fig. 14 is an illustration showing the movement of electromagnetic waves in the λ/4 choke portions in case shown in Fig. 6 where the positions are varied; and
Fig. 15 is a sectional view of a wave guide according to an embodiment of the invention, taken along the Y-Z plane, wherein:
   10...inkjet printer; 12...base; 14...printer unit; 16...toner section; 18...operation section; 20, 22...roller; 24...platen; 26...inkjet head; 50...medium; 100a, 100b...wave guide; 102...electromagnetic-wave supplying end; 104...terminal end; 106...wave guide; 107...introduction slot; 108...medium introduction portion; 109...exit slot; 110...medium exit portion; 112, 114, 116, 118...λ/4 choke portion; 113, 115, 117, 119...opening; 120, 122, 124, 126...choke length; 128, 130...introduction wall; 132, 134...exit wall; 136...silts; 138...slit width; 140...slit interval; 142...choke distance; 150...magnetron; 200...electric field; 201...incident wave; and 202...reflected wave.

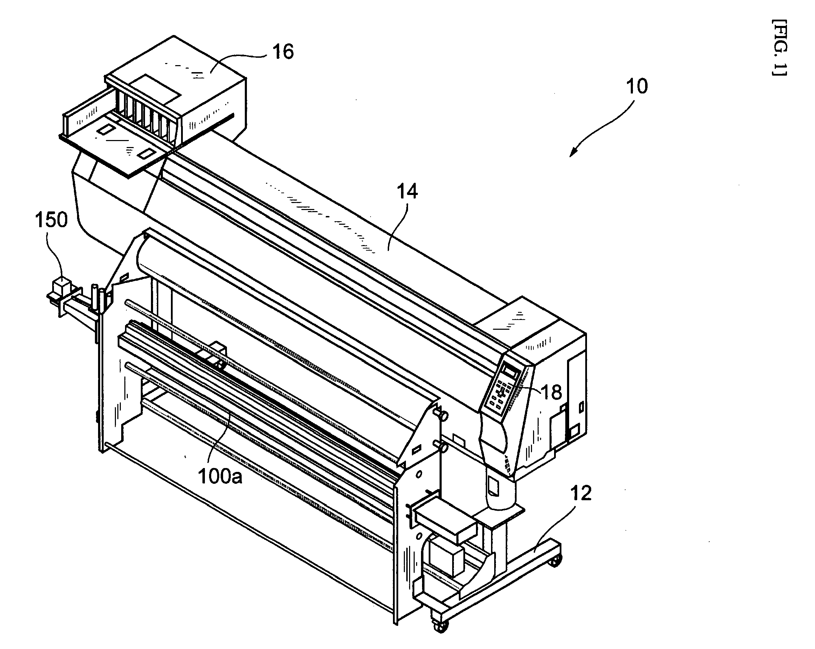

Fig. 1 is a perspective view showing an inkjet printer according to a first embodiment not forming part of the present invention. As shown in Fig. 1, the inkjet printer 10 of this embodiment comprises a printer unit 14 and a wave guide 100a which are mounted on a base 12. The printer unit 14 comprises a toner section 16 in which inks of respective kinds to be ejected on a medium are stored and an operation section 18 by which a user conducts manipulated input. Attached to one end of the wave guide 100a is a magnetron 150 for supplying electromagnetic fields into the wave guide 100a.

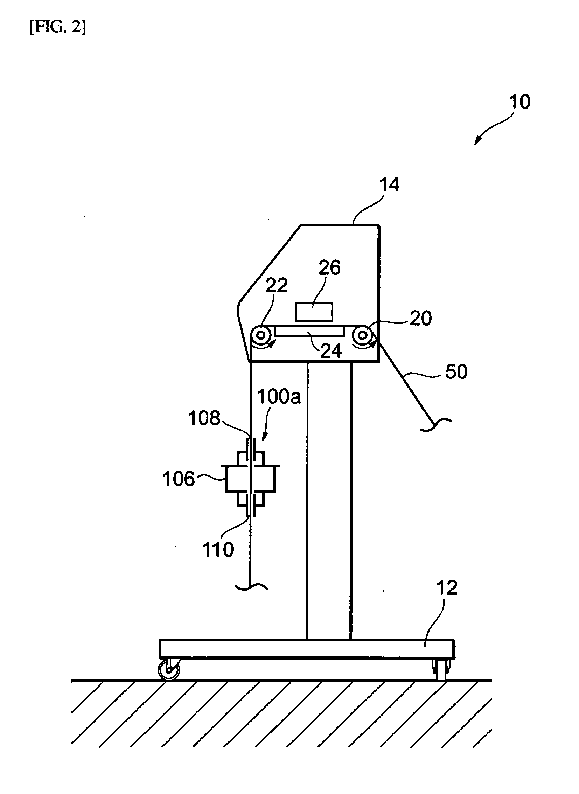

Fig. 2 is an illustration showing a state of printing and drying of a medium in the inkjet printer 10 according to the first embodiment. As shown in Fig. 2, in the inkjet printer 10 of this embodiment, a sheet-like medium 5, which is made of paper, silk, cotton, vinyl chloride or the like and is entered into the printer unit 14, is fed by rollers 20, 22. The medium 50 fed by the rollers 20, 22 is placed on a platen 24 where dye-type ink such as acid dye, reactive dye, and substantive dye or pigment-type ink containing organic solvent such as solvent ink is ejected from an inkjet head 26 onto a surface of the medium 50.

The medium 50 on which the ink was deposited is introduced into a wave guide body portion 106 through a medium introduction portion 108 of the wave guide 100a. Inside the wave guide body portion 106, electromagnetic waves are supplied from the magnetron 150 shown in Fig. 1. The electromagnetic waves supplied by the magnetron 150 are microwaves having a wavelength of from 100 µm to 1 m and a frequency of from 300MHz to 3 THz, preferably, a wavelength of from 0.075 m to 0.15 m and a frequency of from 2 GHz to 4 GHz. In the wave guide body portion 106 into which electromagnetic waves are supplied, the ink deposited on the surface of the medium 50 is dried. The medium 50 entered into the wave guide body portion 106 is fed out of the wave guide body portion 106 through a medium exit portion 110.

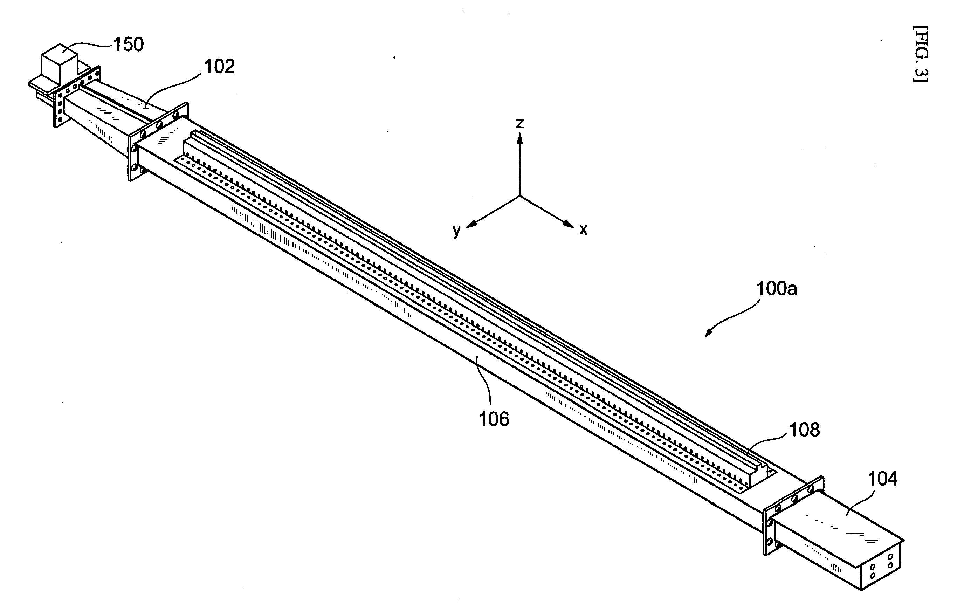

Fig. 3 is a perspective view showing the wave guide according to the first embodiment. As shown in Fig. 3, the wave guide 100a of this embodiment is a rectangular wave guide extending in a direction of illustrated X axis. The wave guide 100a comprises an electromagnetic-wave supplying end 102, a terminal end 104, and the wave guide body portion 106. The magnetron 150 is attached to an end of the electromagnetic-wave supplying end 102. The wave guide body portion 106 is provided with the introduction portion 108 for introducing the medium 50 into the wave guide body portion 106 in a direction parallel to a plane of illustrated X-Z axes. As shown in Fig. 2, the wave guide body portion 106 is provided with the exit portion 110 for leading the medium 50 out of the wave guide body portion 106 in a direction parallel to the plane of illustrated X-Z axes. The lengths of the introduction portion 108 and exit portion 110 in the direction of illustrated X axis are determined according to the width of the medium 50 and may be, for example, in a range of from 0.2 m to 2.0 m. The terminal end 104 treats excess energy of electromagnetic waves passing through the wave guide body portion 106 from the electromagnetic-wave supplying end 102.

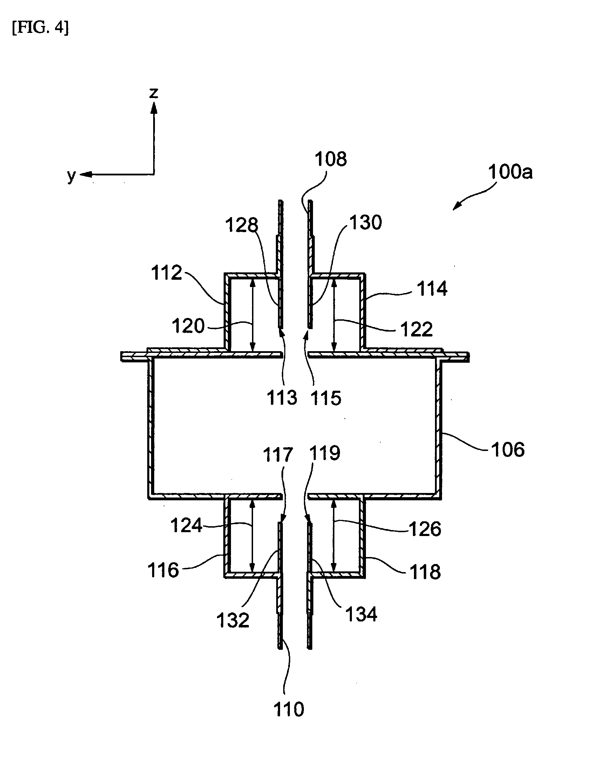

Fig. 4 is a sectional view of the wave guide according to the first embodiment, taken along the Y-Z plane. As shown in Fig. 4, the wave guide 100a of this embodiment is a rectangular wave guide having the wave guide body portion 106 of a rectangular sectional shape as seen in the section along the Y-Z plane. A pair of introduction walls 128, 130 are arranged in such a manner as to sandwich the medium 50 introduced through the introduction portion 108. The introduction walls 128, 130 extend parallel to the front and back surfaces of the medium 50 introduced. Similarly, a pair of exit walls 132, 134 are arranged in such a manner as to sandwich the medium 50 to be led-out and extend parallel to the front and back surfaces of the medium 50 led-out.

The distance between the introduction walls 128, 130 and the distance between the exit walls 132, 134 are preferably so small to prevent the electromagnetic waves from leaking out through the introduction portion 108 and the exit portion 110 and so large to prevent the medium passing through the wave guide body portion 106 from touching any of the introduction walls 128, 130 and the exit walls 132, 134, respectively. Specifically, the distance between the introduction walls 128, 130 and the distance between the exit walls 132, 134 are preferably in a range of from 0.5 mm to 0.05 m, more preferably from 0.01 m to 0.03 m, respectively.

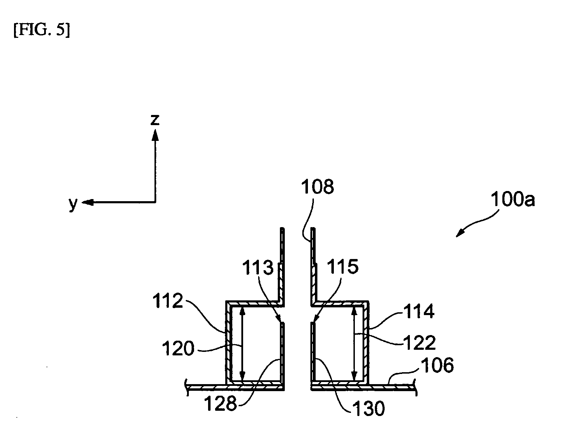

On the outside of the introduction walls 128, 130, λ/4 choke portions 112, 114 are disposed in such a manner as to cooperate together with parts of the introduction walls 128, 130 to define quadrangular columnar inner spaces, respectively. Each of the λ/4 choke portions 112, 114 has a rectangular shape as seen in the sectional view along the illustrated Y-Z plane. The λ/4 choke portions 112, 114 have openings 113, 115 communicating with the inner spaces from the introduction walls 128, 130, respectively. The openings 113, 115 are preferably formed at positions apart from the wave guide body portion 106 in the outward direction by a predetermined distance. Specifically, as shown in Fig. 4, the openings 113, 115 are preferably formed at positions closest to the inside of the wave guide body portion 106. Alternatively, as shown in Fig. 5, the openings 113, 115 are preferably formed at positions apart from the wave guide body portion 106 in the outward direction by a distance of λ/4 relative to the wavelength λ of the electromagnetic waves supplied from the magnetron 150 or at positions apart from the wave guide body portion 106 in the outward direction by a distance of λ/4 x n (n is a natural number equal to or more than 1).

Similarly, on the outside of the exit walls 132, 134, λ/4 choke portions 116, 118 are disposed in such a manner as to cooperate together with parts of the exit walls 132, 134 to define quadrangular columnar inner spaces, respectively. Each of the λ/4 choke portions 116, 118 has a rectangular shape as seen in the sectional view along the illustrated Y-Z plane. The λ/4 choke portions 116, 118 have openings 117, 119 communicating with the inner spaces from the exit walls 132, 134, respectively. The openings 117, 119 are preferably formed at positions apart from the wave guide body portion 106 in the outward direction by a predetermined distance. Specifically, as shown in Fig. 4, the openings 117, 119 are preferably formed at positions closest to the inside of the wave guide body portion 106. Alternatively, the openings 117, 119 are preferably formed at positions apart from the wave guide body portion 106 in the outward direction by a distance of λ/4 relative to the wavelength λ of the electromagnetic waves supplied from the magnetron 150 or at positions apart from the wave guide body portion 106 in the outward direction by a distance of λ/4 x n (n is a natural number equal to or more than 1).

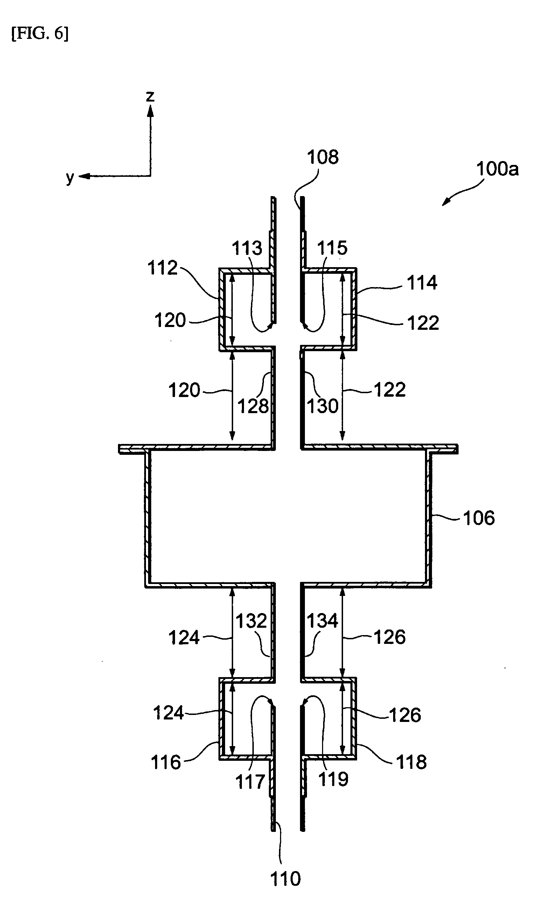

The quadrangular-columnar inner spaces having rectangular bottoms defined by λ/4 choke portions 112, 114, 116, and 118 have choke lengths 120, 122, 124, and 126, as length in a feeding direction of the medium 50 in the illustrated Z-axis direction, each of which is λ/4 relative to the wavelength λ of the electromagnetic waves supplied from the magnetron 150. The length of the openings 113, 115 , 117 and 119 in the feeding direction of the medium 50 in the illustrated Z-axis direction may be 1/3 of each choke length 120, 122, 124, 126. For example, when the wavelength λ of the electromagnetic waves supplied from the magnetron 150 is 0.12 m, each of the choke lengths 120, 122, 124 and 126 may be 0.03 m which is 1/4 of the wavelength λ. The length of the openings 113, 115, 117 and 119 in the feeding direction of the medium 50 in the illustrated Z-axis direction may be 0.01 m which is 1/3 of each of the choke lengths 120, 122, 124 and 126. It should be noted that, as shown in Fig. 6, the λ/4 choke portions 112, 114, 116, and 118 may be disposed at positions apart from the wave guide body portion 106 in the outward direction, for example, by distances corresponding to the choke lengths 120, 122, 124, 126.

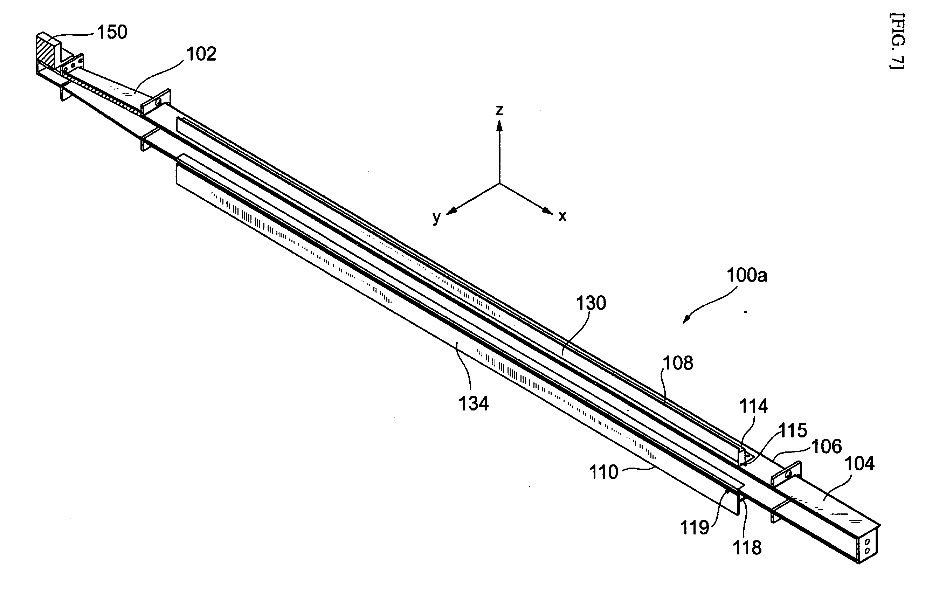

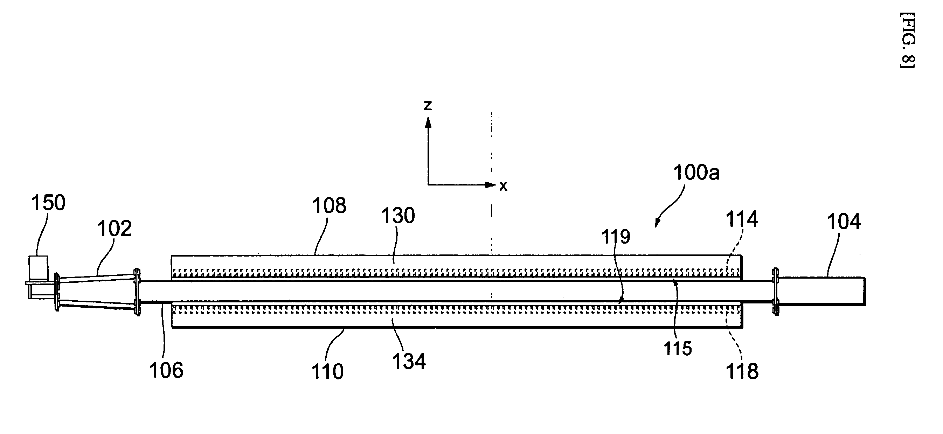

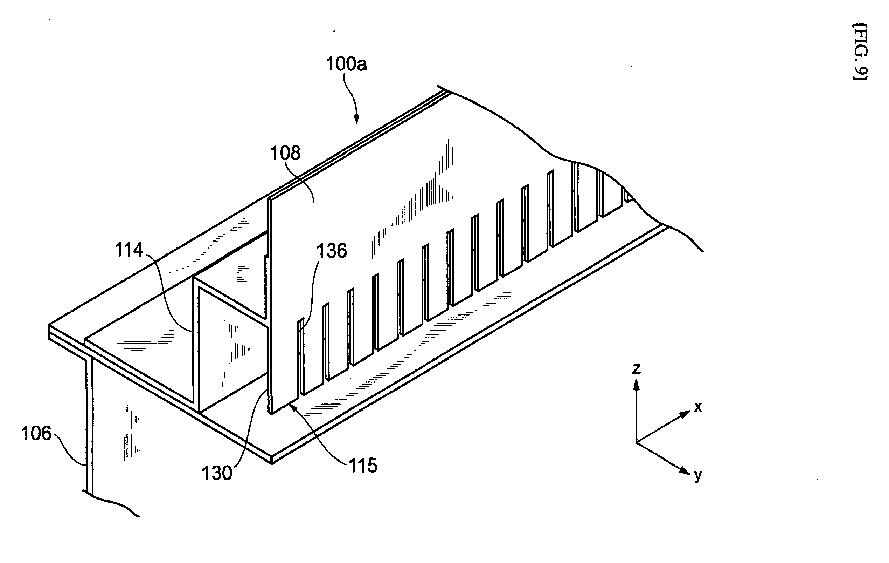

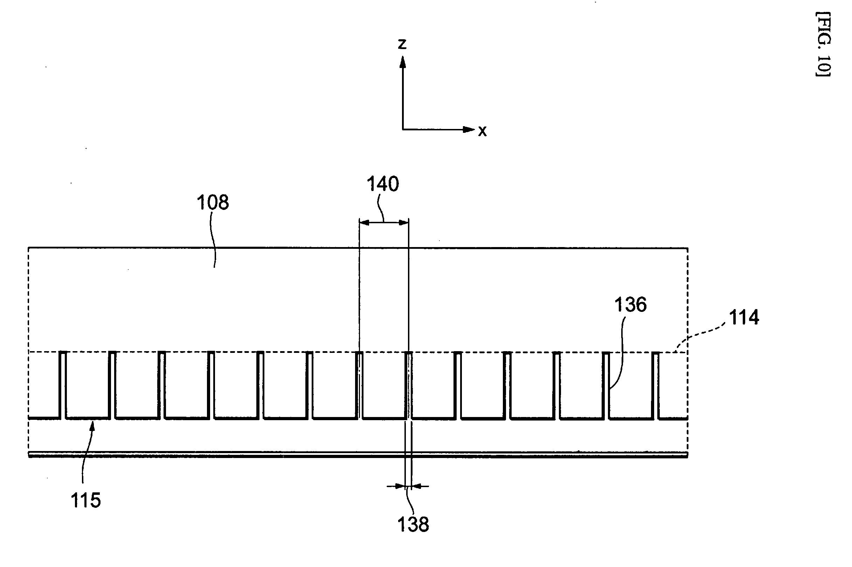

Fig. 7 is a perspective sectional view of the wave guide according to the first embodiment, taken along the X-Y plane, Fig. 8 is a sectional view taken along the X-Z plane, Fig. 9 is a perspective sectional view of a portion about slits of the wave guide according to the first embodiment, taken along the X-Z plane, and Fig. 10 is a sectional view of the portion about the slits of the wave guide according to the first embodiment, taken along the X-Z plane. As shown in Fig. 7 and Fig. 8, the introduction wall 130, the exit wall 134, and the λ/4 choke portions 114, 118 extend parallel to the illustrated X-axis direction and the openings 115, 119 compose rectangular openings in the illustrated X-Z plane.

As shown in Fig. 8 through Fig. 10, the introduction wall 130 and the exit wall 134 have silts 136 which extend from the peripheries of the openings 115, 119 in the outward direction of the wave guide 110a. The plurality of slits 136 are formed at equal intervals in the introduction wall 130 and the exit wall 134. The same is exactly true for the introduction wall 128, the exit wall 132, the λ/4 choke portions 112, 116, and the openings 113, 117 which are not shown in Fig. 8 through Fig. 10.

The extending direction of each slit 136 is parallel to the feeding direction of the medium 50 in the illustrated Z-axis direction. The respective slits 136 extend from the peripheral edges of the openings 113, 115, 117 and 119 to positions within the spaces defined by the λ/4 choke portions 112, 114, 116, and 118 and most distant from the wave guide body portion 106, respectively. The respective slits 136 of the introduction walls 128, 130 are formed at locations facing each other via the medium 50 introduced. Alternatively, the respective silts 136 formed in the introduction walls 128, 130 may be formed at locations alternately arranged to the front surface and the back surface of the medium 50 in a state the medium 50 introduced is sandwiched between the introduction walls 128 and 130. The width of each slit 136 in the illustrated X-axis direction is in a range of from 1 mm to 10 mm and the interval between adjacent slits 136 in the illustrated X-axis direction is in a range of from 10 mm to 30 mm.

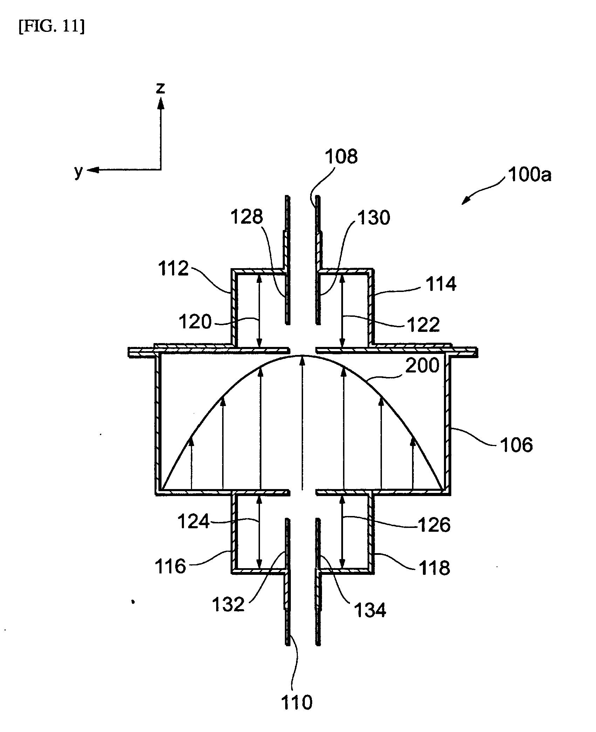

Hereinafter, the operation of the inkjet printer 10 of this embodiment, especially the action of the wave guide 100a, will be described. In the printer unit 14, after deposition of ink onto the surface of the medium 50, the medium 50 is introduced into the wave guide 100a. As shown in Fig. 11, an electric field 200 in the illustrated Y-Z plane of the wave guide body portion 106 into which electromagnetic waves are supplied from the magnetron 150 is an electric field produced in the rectangular wave guide by transmission of the electromagnetic waves in TE₁₀ mode. Water molecules of the ink deposited on the medium 50 are vibrated with energy of the electromagnetic waves and are thereby vaporized. Therefore, the process from the printing by ejection of ink to the drying of the ink can be conducted by uninterrupted processes, thereby effectively drying the medium 50.

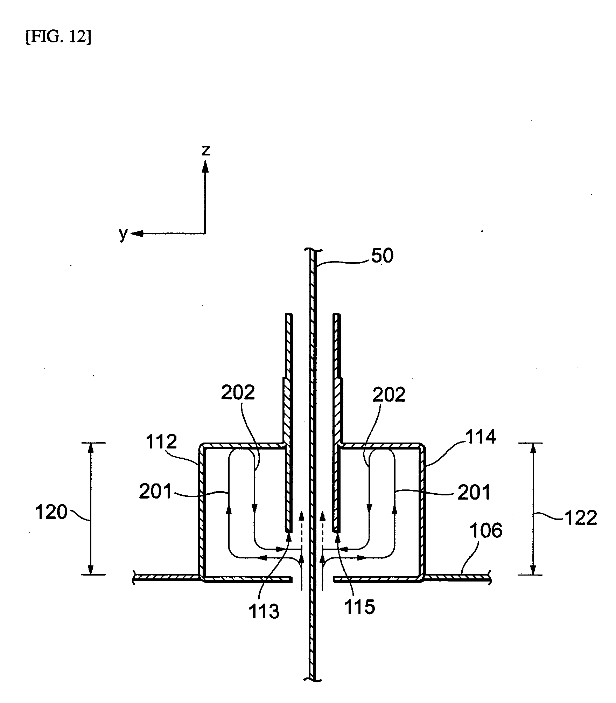

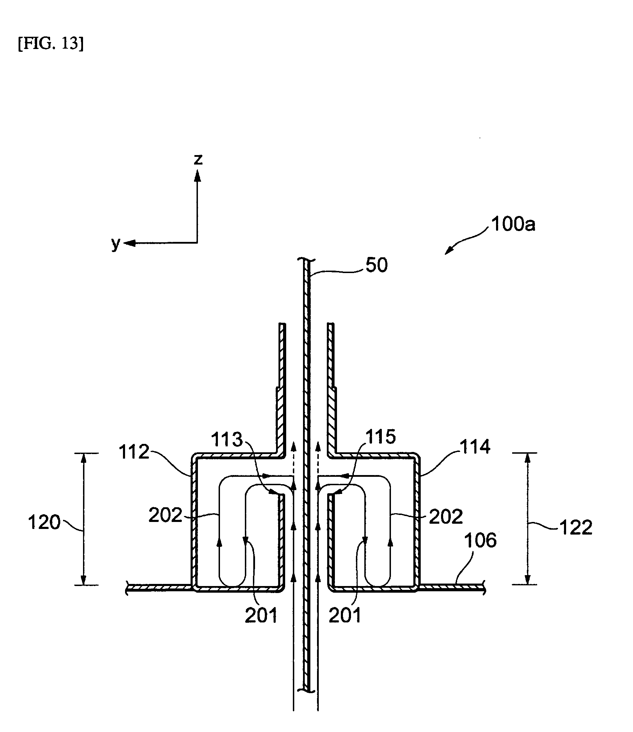

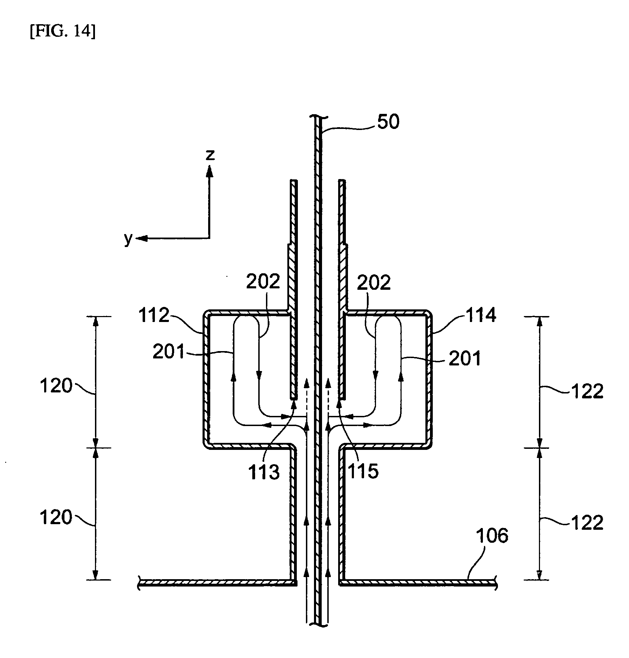

Fig. 12 is an illustration showing courses of the electromagnetic waves in the λ/4 choke portions. As shown in Fig. 12, the electromagnetic waves in the wave guide body portion 106 are about to leak out of the wave guide 100a along the sides of the medium 50. In this embodiment, incident waves 201 entered into the λ/4 choke portions 112, 114 through the openings 113, 115 are reflected at walls of the λ/4 choke portions 112, 114 after running the choke lengths 120, 122 of the λ/4 choke portions 122, 114. The reflected waves 202 are out of phase with the incident waves 201 by λ/2 so that the reflected waves 202 and the incident waves 201 attenuate each other, thereby preventing the electromagnetic waves from leaking out of the wave guide 100a along the sides of the medium 50. As shown in Fig. 13, the same effect is obtained also in case that the openings 113, 115 are formed at positions apart from the wave guide body portion 106 in the outward direction by a distance of λ/4. As shown in Fig. 14, the same effect is obtained also in case that the respective λ/4 choke portions 112, 114, 116, 118 are disposed at positions apart from the wave guide body portion 106 in the outward direction.

Since the slits 136 are formed in the introduction walls 128, 130 and the exit walls 132, 134 in this embodiment, it is possible to split the current flowing along the introduction walls 128, 130 and the exit walls 132, 134. Therefore, it is possible to prevent the electromagnetic waves from leaking out of the wave guide 100a along the introduction walls 128, 130 and the exit walls 132, 134.

Since all of the respective inner spaces of the λ/4 choke portions 112, 114, 116, 118 are located outside of the wave guide body portion 106 in this embodiment, it is possible to prevent the electromagnetic waves in the wave guide body portion 106 from being disrupted due to the choke portions 112, 114, 116, 118.

The inkjet printer 10 of this embodiment can print on a sheet-like medium 50 made of paper, silk, cotton, vinyl chloride or the like with dye-type ink such as acid dye, reactive dye, and substantive dye or pigment-type ink containing organic solvent such as solvent ink, and uninterruptedly dry the medium 50.

In case of using aqueous ink or solvent ink relative to the sheet-like medium 50 made of paper, silk, cotton, vinyl chloride or the like, acid dye or reactive dye as dye-type ink infiltrates into fibers of the medium 50 so as to spread in the fibers, thereby staining the medium 50. Therefore, the spread of the ink in the fibers of the medium 50 is promoted by electromagnetic waves supplied to the medium 50 through the wave guide 100a like the aforementioned embodiment, thereby improving the drying speed.

Solvent ink as pigment-type ink of an organic solvent type contains a resin therein so that the surface of the medium 50 is stained by the resin. Therefore, the drying of the moisture contained in the resin of the solvent ink is promoted by electromagnetic waves supplied to the medium 50 through the wave guide 100a, thereby improving the drying speed.

On the other hand, substantive dye as a dye-type ink does not infiltrate into fibers of the medium 50 and stains the medium 50 just by that the ink is deposited on the surface of the medium 50. However, even in case of the substantive dye, if a resin is contained in the ink, the drying of moisture in the resin is promoted. Accordingly, like the aforementioned embodiment, the drying speed is improved by supplying electromagnetic waves to the medium 50 through the wave guide 100a.

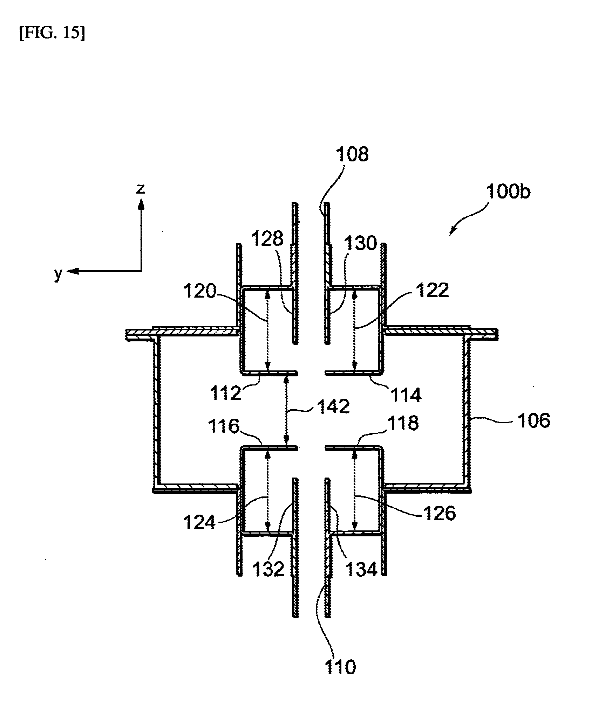

Hereinafter, an embodiment of the present invention will be described. Fig. 15 is a sectional view of a wave guide 100b according to said embodiment, taken along a Y-Z plane. As shown in Fig. 15, the wave guide 100b of this embodiment is different from that of the aforementioned first embodiment in that the respective inner spaces of the λ/4 choke portions 112, 114, 116, 118 are partly positioned inside the wave guide body portion 106. The choke distance 142 between the choke portions is set to be so large not to strike an arc within the wave guide body portion 106.

Since the respective inner spaces of the λ/4 choke portions are partly positioned inside the wave guide body portion 106 in this embodiment, the λ/4 choke portions 112, 114 of the introduction portion 108 side and the λ/4 choke portions 116. 118 of the exit portion 110 side are located close to each other so that the choke distance 142 therebetween is small, thereby increasing the strength of electric field in the wave guide body portion 106.

The present invention is not limited to the aforementioned embodiments and it should be understood that various changes and modifications may be made without departing from the scope of the intention as defined by the claims.

## Claims

1. An inkjet printer (10) comprising:
an ejection means (26) for ejecting ink onto either one of front and back surfaces of a sheet-like recording medium (5);
a wave guide (100a) which is adapted to allow the recording medium on which the ink is deposited by said ejection means to pass through the inside of the wave guide; and
an electromagnetic-wave supplying means (150) for supplying electromagnetic waves into said wave guide, wherein
said wave guide (100a) has a wave guide body portion (106), an introduction portion (108) for introducing said recording medium into the inside of said wave guide body portion (106) and an exit portion (110) for leading said recording medium out of the inside of said wave guide body portion (106), wherein
said introduction portion (108) includes
two introduction walls (128, 130) which are disposed to sandwich said recording medium introduced therebetween and are parallel to the front and back surfaces of said recording medium, respectively, and
two choke portions (112, 114) which cooperate together with parts or all of said introduction walls (128, 130), as their side surfaces, to define quadrangular columnar inner spaces, respectively and have openings (113, 115) communicating with said inner spaces from said introduction walls(128, 130), respectively, wherein
said exit portion (110) includes
two exit walls (132, 134) which are disposed to sandwich said recording medium to be led-out therebetween and are parallel to the front and back surfaces of said recording medium, respectively, and
two choke portions (116, 118) which cooperate together with parts or all of said exit walls (132, 134), as their side surfaces, to define quadrangular columnar inner spaces, respectively and have openings (117, 119) communicating with said inner spaces from said exit walls (132, 134), respectively, and wherein
each of said inner spaces of said choke portions (112, 114, 116, 118) has a length in a feeding direction of said recording medium which is λ/4 relative to the wavelength λ of electromagnetic wave supplied by said electromagnetic-wave supplying means, **characterized in that** said respective inner spaces of said choke portions (112, 114, 116, 118) are partly positioned inside said wave guide body portion (106).

2. An inkjet printer according to claim 1, wherein said introduction wall and said exit wall have slits (136) which extend from the peripheries of said openings in the outward direction of said wave guide.

## Patentansprüche

1. Tintenstrahldrucker (10), umfassend:
ein Ausstoßmittel (26) zum Ausstoßen von Tinte auf eine einer Vorder- und Rückfläche bzw. -oberfläche eines blattartigen Aufzeichnungsmediums (5);
einen Wellenleiter (100a), der angepasst ist, dem Aufzeichnungsmedium, auf dem die Tinte durch das Ausstoßmittel aufgebracht wird, zu erlauben, durch das Innere des Wellenleiters zu laufen; und
ein Elektromagnetische-Wellen-Zuführmittel (150) zum Zuführen elektromagnetischer Wellen in den Wellenleiter, wobei
der Wellenleiter (100a) einen Wellenleiterkörperabschnitt (106), einen Einbringungsabschnitt (108) zum Einbringen des Aufzeichnungsmediums in das Innere des Wellenleiterkörperabschnitts (106), und einen Ausgangsabschnitt (110) zum Herausführen des Aufzeichnungsmediums aus dem Inneren des Wellenleiterkörperabschnitts (106) enthält, wobei
der Einbringungsabschnitt (108) enthält:
zwei Einbringungswände (128, 130), die so angeordnet sind, dass sie das eingebrachte Aufzeichnungsmedium sandwichartig zwischen sich umgeben und parallel zu der Vorder- bzw. Rückfläche des Aufzeichnungsmediums sind, und
zwei Drosselabschnitte (112, 114), die mit Teilen oder den gesamten Einbringungswänden (128, 130) als ihre Seitenflächen bzw. -oberflächen zusammenarbeiten, um jeweils viereckige, säulenförmige Innenräume zu definieren, und die Öffnungen (113, 115) aufweisen, die jeweils mit den Innenräumen von den Einbringungswänden (128, 130) kommunizieren bzw. in Verbindung stehen, wobei
der Ausgangsabschnitt (110) enthält:
zwei Ausgangswände (132, 134), die so angeordnet sind, dass sie das herauszuführende Aufzeichnungsmedium sandwichartig zwischen sich umgeben und parallel zu der Vorder- bzw. Rückfläche des Aufzeichnungsmediums sind, und
zwei Drosselabschnitte (116, 118), die mit Teilen oder den gesamten Ausgangswänden (132, 134) als ihre Seitenflächen bzw. -oberflächen zusammenarbeiten, um jeweils viereckige, säulenförmige Innenräume zu definieren, und die Öffnungen (117, 119) aufweisen, die jeweils mit den Innenräumen von den Ausgangswänden (132, 134) kommunizieren bzw. in Verbindung stehen, und wobei
jeder der Innenräume der Drosselabschnitte (112, 114, 116, 118) eine Länge in einer Vorschubrichtung des Aufzeichnungsmediums aufweist, die λ/4 relativ zu der Wellenlänge λ der elektromagnetischen Welle ist, die durch das Elektromagnetische-Wellen-Zuführmittel zugeführt wird, **dadurch gekennzeichnet, dass** die jeweiligen Innenräume der Drosselabschnitte (112, 114, 116, 118) teilweise innerhalb des Wellenleiterkörperabschnitts (106) positioniert sind.

2. Tintenstrahldrucker nach Anspruch 1, wobei die Einbringungswand und die Ausgangswand Schlitze (136) aufweisen, die sich von den Peripherien bzw. Umfängen der Öffnungen in der Außwärtsrichtung des Wellenleiters erstrecken.

## Revendications

1. Imprimante à jet d'encre (10) comprenant :
un moyen d'éjection (26) destiné à éjecter de l'encre sur l'une ou l'autre de surfaces avant et arrière d'un support d'enregistrement en forme de feuille (5) ;
un guide d'onde (100a) qui est adapté de manière à permettre le passage du support d'enregistrement sur lequel de l'encre est déposée par ledit moyen d'éjection par l'intérieur du guide d'onde ; et
un moyen d'alimentation en ondes électromagnétiques (150) destiné à délivrer des ondes électromagnétiques audit guide d'onde, dans laquelle
ledit guide d'onde (100a) comporte une partie principale formant guide d'onde (106), une partie d'introduction (108) destinée à introduire ledit support d'enregistrement à l'intérieur de ladite partie principale formant guide d'onde (106) et une partie de sortie (110) destinée à conduire ledit support d'enregistrement vers l'extérieur de ladite partie principale formant guide d'onde (106), dans laquelle
ladite partie d'introduction (108) comporte
deux parois d'introduction (128, 130) qui sont disposées de manière à intercaler ledit support d'enregistrement introduit entre elles et sont respectivement parallèles aux surfaces avant et arrière dudit support d'enregistrement, et
deux parties d'atténuation (112, 114) qui coopèrent ensemble avec des parties ou la totalité desdites parois d'introduction (128, 130), en tant que leurs surfaces latérales, afin de définir respectivement des espaces internes en colonne quadrangulaire, et comportent des ouvertures (113, 115) communiquant respectivement avec lesdits espaces internes à partir desdites parois d'introduction (128, 130), dans laquelle
ladite partie de sortie (110) comporte
deux parois de sortie (132, 134) qui sont disposées de manière à intercaler ledit support d'enregistrement à conduire à l'extérieur entre elles et sont respectivement parallèles aux surfaces avant et arrière dudit support d'enregistrement, et
deux parties d'atténuation (116, 118) qui coopèrent ensemble avec des parties ou la totalité desdites parois de sortie (132, 134), en tant que leurs surfaces latérales, afin de définir respectivement des espaces internes en colonne quadrangulaire, et comportent des ouvertures (117, 119) communiquant respectivement avec lesdits espaces internes à partir desdites parois de sortie (132, 134), et dans laquelle
chacun desdits espaces internes desdites parties d'atténuation (112, 114, 116, 118) présente une longueur dans la direction d'alimentation dudit support d'enregistrement qui est égale à λ/4 par rapport à la longueur d'onde λ de l'onde électromagnétique délivrée par ledit moyen d'alimentation en ondes électromagnétiques, **caractérisée en ce que** lesdits espaces internes respectifs desdites parties d'atténuation (112, 114, 116, 118) sont partiellement positionnés à l'intérieur de ladite partie principale formant guide d'onde (106).

2. Imprimante à jet d'encre selon la revendication 1, dans laquelle ladite paroi d'introduction et ladite paroi de sortie comportent des fentes (136) qui s'étendent à partir des périphéries desdites ouvertures vers l'extérieur dudit guide d'onde.
